# EUROPEAN PATENT APPLICATION

(11) **EP 4 715 328 A1**
(43) Date of publication of application: **25.03.2026**
(21) Application number: 24202160.8
(22) Date of filing: 24.09.2024
(51) Int. Cl.: G01C 11/02, B64D 47/08, B64U 20/87, G03B 37/04

(54) **CAMERA ARRANGEMENT FOR AERIAL IMAGING**

(71) Applicant: Hexagon Innovation Hub GmbH, 9435 Heerbrugg (CH)
(72) Inventor: STIGWALL, Johan, 9000 St. Gallen (CH); WOHLGENANNT, Rainer, A-6833 Klaus (AT); KIRCHHOFER, Werner, CH-9428 Walzenhausen (CH)
(74) Representative: Kaminski Harmann

(57) **Abstract**

The invention relates to airborne surveying by using an aerial imaging device (1) that comprises a plurality of camera arrangements. The cameras are arranged and configured to have different viewing directions in a device-transverse direction that corresponds to a cross-track direction perpendicular to the track direction (4) of a flying carrier vehicle (2), wherein overlapping fields of view of the cameras provide in device-transverse direction a combined uninterrupted total field of view (30) of at least 75 degrees, which is larger than an individual field of view of each of the cameras. Images of the cameras are combined for providing generation of a country mode composite image, a city mode composite nadir image, and city mode side oblique images. The country mode composite image is generated based on a combination of images from several of the cameras of the plurality of cameras and provides a field of view in device-transverse direction which essentially corresponds to the uninterrupted total field of view (30). The city mode composite nadir image is generated based on a combination of images from several of the cameras of the plurality of cameras and provides a field of view (31) in device-transverse direction which is only a partial section of the field of view of the country mode composite image. The city mode side oblique images provide fields of view in device transverse direction which are only partial sections of the total field of view (30) and have more oblique viewing directions than the city mode composite nadir image.

## Description

### FIELD OF THE INVENTION

The invention pertains to an aerial imaging device comprising a plurality of camera arrangements and configured to be mounted on a carrier vehicle to acquire airborne imagery of a target area.

### BACKGROUND OF THE INVENTION

Aerial photography is used in a large number of different application domains, e.g. cartography, particularly in photogrammetric surveys, land surveying, powerline monitoring, infrastructure monitoring, disaster recovery planning and so forth.

Airborne imaging devices dedicated to being carried by a carrier vehicle are utilized for acquiring aerial photographs of a target area. The term carrier vehicle refers to an arbitrary type of aircraft, such as fixed-wing airplanes, helicopters, multicopters, and airships. These carrier vehicles can be manned or unmanned (i.e. drones).

It is common practice to combine multiple aerial images in order to obtain coverage of relatively large areas. In the domain of aerial imaging, the combination of consecutively captured images in one line during flight is referred to as a swath. In other words, a swath comprises a plurality of images that are captured in a track direction and combined to an image strip. The track direction might be defined prior to or during an imaging flight. Depending on the intended application, a swath might be desired to be continuous as well as characterized by a uniform width. The swath width is defined perpendicular to the track direction.

The combination of multiple images may be done in real time on the acquisition vehicle itself, e.g. for immediate quality control. For example, such quality control can already be carried out on combined images of reduced quality, wherein high-quality processing of the multiple images is done after acquisition of the images when the aerial vehicle is back on ground, e.g. offline on a server farm or cluster.

The maximum width of a swath is given by the extent of the field of view of the imaging device transverse to the track direction (also referred to as travel direction). The carrier vehicle is arranged to fly a predefined flight path such that the target area is captured. Oftentimes, this flight path comprises multiple parallel tracks, flown in alternating direction, such that the complete target area can be covered. However, other flight patterns are possible. The separation between the parallel tracks is chosen such that there is at least some overlap between the adjacent swath, therefore being dependent on the swath width. Generally, the swath would be desired to be as wide as possible to minimize flight times. However, depending on the application, the maximum usable swath width and thus also the allowable maximum track spacing might vary, depending on a variety of factors, such as the ground sampling distance.

By means of example, terrain mapping is primarily intended to produce nadir views, e.g. to produce orthophotos or a land-use map of an area. On one hand, as terrain mapping might extend over large areas, the swath width is desired to be as wide as possible. On the other hand, as nadir views are preferred over oblique views, because the latter might comprise perspective distortions, the usable field of view of a camera system is limited. State of the art imaging systems oftentimes comprise a single camera directed towards nadir.

By another example, in urban mapping and modelling, it might be of interest to acquire both nadir views as well as oblique views. For instance, the oblique views comprise building facades, which might be combined with nadir views in order to produce geospatial data, such as 3D models. Commonly such imaging systems might comprise up to five cameras, one camera being directed in nadir direction and the remaining four cameras being directed in oblique directions to the front, the back, the right, and the left, in particular with their optical axes directed at a 45-degree angle relative to nadir direction. Due to the arrangement of the oblique cameras, building facades can be captured from four directions. A section between the nadir field of view and the oblique fields of view might remain uncovered, as these are not of interest for such applications.

To reach sufficient resolution and swath widths, it is common to utilize cameras with relatively large image sensors. Moreover, the necessity for highly specific camera arrangements and optical components, such as lenses, oftentimes require tailor-made devices for individual applications. Consequently, such aerial photography systems might come with high prices while only serving a very specific use-case. Also, such hardware can result in relatively large and heavy devices.

### OBJECT OF THE INVENTION

In view of the above circumstances, the object of the present invention is to provide an improved aerial imaging system that covers multiple areas of application.

This objective is achieved by realizing at least parts of the characterising features of the independent claims. Features, which further develop the invention in an alternative or advantageous manner are described in the dependent patent claims.

### SUMMARY OF THE INVENTION

The invention relates to a system comprising an aerial imaging device configured to be mounted on a carrier vehicle, the carrier vehicle being configured to be traveling in a track direction and at a traveling height. The aerial imaging device is configured to acquire airborne imagery of a target area and comprises a plurality of cameras, wherein each camera has a camera field of view. The cameras are arranged and configured to have different viewing directions in a device-transverse direction. The device-transverse direction corresponds to a cross-track direction perpendicular to the track direction.

The cameras of the plurality of cameras have overlapping fields of view such that - in the device-transverse direction - the cameras together provide a combined uninterrupted total field of view of at least 75 degrees, e.g. at least 90 degrees, which is larger than an individual field of view of each of the cameras.

For example, the cameras of the plurality of cameras are embodied as visual camera, e.g. color cameras such as RGB cameras.

By way of example, the plurality of cameras of the aerial imaging device comprises at least five cameras, e.g. at least seven cameras.

The system further comprises a computing unit that is configured to combine images of the cameras of the plurality of cameras for providing generation of a country mode composite image, a city mode composite nadir image, and city mode side oblique images. The country mode composite image is generated based on a combination of images from several of the cameras of the plurality of cameras and provides a field of view in device-transverse direction which is only a partial section of the total field of view. The city mode composite nadir image is generated based on a combination of images from several of the cameras of the plurality of cameras and provides a field of view in device-transverse direction which is only a partial section of the field of view of the country mode composite image. The city mode side oblique images provide fields of view in device transverse direction which are only partial sections of the total field of view and have more oblique viewing directions (to the side, e.g. to the left or right from the carrier vehicle/aerial imaging device) than the city mode composite nadir image.

The cameras that effect the side oblique images are arranged such that their optical axes are tilted from nadir direction in device-transverse direction. In other words, these cameras point away from nadir. In the device-transverse direction, an angle difference between the viewing directions (e.g. the optical axes) of two of the cameras is at least 70 degrees. For example, each of the cameras for providing the city mode side oblique images is angled left or right from the nadir direction and has a viewing direction left or right that deviates from the nadir direction between 30 and 60 degrees.

In addition to the cameras effecting the side oblique images, the aerial imaging device may further comprise cameras for effecting a forward and/or rear oblique field of view, wherein these cameras are arranged such that their optical axes are tilted from nadir direction in track direction. For example, each of the cameras for providing the forward and/or rear field of view is angled forward or backward from the nadir direction and has a viewing direction forward or backward that deviates from the nadir direction between 30 and 60 degrees.

It is noted that the field of view in device-transverse direction provided by the country mode composite image differs from the field of view in device-transverse direction provided by the city mode composite nadir image.

The computing unit may be fully or at least partly arranged on the aerial imaging device. Alternatively, the computing unit may be fully separated from the aerial imaging device, e.g. wherein the computing unit is embodied as offline server and/or cloud unit.

For example, the aerial imaging device is configured for combining multiple images essentially in real time, e.g. for immediate quality control. For example, such quality control may comprise derivation of at least one of a (test) country mode composite image, a (test) city mode composite nadir image, and a (test) city mode side oblique image of reduced quality, e.g. compared to final images generated by a more powerful computing unit part detached from the aerial imaging device. Typically, high-quality processing of the images of the plurality of cameras for generating a (final) country mode composite image, a (final) city mode composite nadir image, and a (final) city mode side oblique image is done after acquisition of the images when the aerial vehicle is back on ground, e.g. by a separate part of the computing unit detached from the aerial imaging device.

In a further embodiment, the computing unit is configured to provide that in the country mode the country mode composite image is generated from images of a group of the cameras of the plurality of cameras, namely country mode group. Further, In the city mode the city mode composite nadir image might be generated from images of a further group of the cameras of the plurality of cameras, namely city mode nadir group. It is noted that the city mode nadir group differs from the country mode group. In other words, the city mode nadir group provides a different camera selection from the plurality of cameras than the country mode group. Moreover, in the city mode the city mode side oblique images might be generated from images of a further group of the cameras of the plurality of cameras, namely city mode oblique group. The city mode oblique group might differ from the city mode nadir group and the country mode group. Particularly, the side oblique images might be generated based on one or multiple image sections of one or multiple images provided by the city mode oblique group. More particularly, in device-transverse direction the fields of view of the cameras of the city mode oblique group might point further away from nadir than the cameras of the city mode nadir group.

By means of example, the cameras that are comprised by the country mode group and the city mode nadir group are arranged symmetrically around the nadir direction, whereas, for example, the city mode oblique group comprises two cameras that are arranged such that one points 45 degrees from nadir to the left in device-transverse direction and the other one points 45 degrees from nadir to the right in device-transverse direction.

In a further embodiment, the country mode group comprises more cameras than the city mode nadir group, e.g. wherein the country mode group comprises a selection of cameras of the plurality of cameras that provides the combined uninterrupted total field of view in the device-transverse direction. For example, the country mode group makes use of all cameras of the plurality of cameras.

In a further embodiment, the aerial imaging device might be configured that the combined uninterrupted total field of view expands over an angle in the device-transverse direction. For the country mode composite images, the angle might correspond to at least 70 degrees, particularly at least 100 degrees. For the city mode composite nadir images, the angle might correspond to less than 80 degrees, particularly less than 60 degrees.

In a further embodiment, the aerial imaging device, e.g. as part of the plurality of cameras, further comprises at least one camera that is configured to effect a forward oblique field of view, e.g. comprising two or more cameras that are arranged in such a way that their fields of view are laterally adjacent and partially overlap (e.g. the individual fields of view complement each other to form a lager, uninterrupted field of view in device-transverse direction). Furthermore, it might also comprise at least one camera that is configured to effect a rear oblique field of view, e.g. comprising two or more cameras that are arranged in such a way that their fields of view are laterally adjacent and partially overlap. For example, one or more cameras for providing the forward oblique field of view points 45 degrees from the nadir direction forward, and one or more cameras for providing the rear oblique field of view point 45 degrees from the nadir direction backward.

Moreover, the computing unit might be configured for the city mode to provide forward oblique images and rear oblique images, e.g. wherein a combined uninterrupted total field of view of the city mode nadir group in devise-transverse direction spans at least over the same angle in device-transverse direction as an uninterrupted total field of view in device-transverse direction of the forward oblique field of view or the rear oblique field of view.

By means of example, the images effected by the city mode oblique group might be utilized (in combination with the city mode nadir group) to derive 3D data. For instance, building facades might be captured by the city mode oblique group that allows for creating a 3D model of a setting in a city.

Often it is also beneficial to have 3D geometry to generate an orthophoto in cities, e.g. wherein the 3D geometry is derived from LIDAR and/or photogrammetry. By way of example, the images provided by the city mode nadir group and the city mode oblique group are used for constructing a complete 3D model, which is then rendered without perspective as a 2D orthophoto.

In a further embodiment, the aerial imaging device further comprises a near-infrared camera, wherein the near-infrared camera has a near-infrared field of view and is arranged in such a way that the near-infrared field of view partially overlaps with the combined uninterrupted total field of view of the plurality of cameras. In some embodiments, the aerial imaging device comprises two near-infrared cameras, wherein the near-infrared cameras might be arranged in such a way that the near-infrared fields of view partially overlap. In a further embodiment, an overlapping section of the near-infrared fields of view does not coincide with any overlapping section of the overlapping camera fields of view of the plurality of cameras (that form the combined uninterrupted total field of view).

The orientation of an image and thus also of a camera frame is commonly referred to regarding the orientation of the image, namely a vertical or portrait orientation, i.e. the image height being greater than the width, and a horizontal or landscape orientation, i.e. the image height being less than the width. It is noted that in this application, the term "width" refers to the extent of the image in device-transverse direction, whereas the term "height" refers to the extent of the image in track-direction.

In a further embodiment, one or more cameras of the plurality of cameras are oriented to a landscape mode and another camera of the plurality of cameras is oriented to a portrait mode, e.g. wherein the camera field of view of the landscape mode is rotated by 90 degrees compared to the portrait mode. For example, the cameras have rectangular sensors, each sensor having two sides of different length, wherein an extension of a length (longer side of the rectangular sensor) of a sensor of the one or more cameras (which is oriented to landscape mode) is rotated by 90 degrees compared to an extension of a length of a sensor of the other camera (which is oriented to portrait mode).

In a further embodiment, at least a subset of the plurality of cameras might be arranged in a straight line in the track direction. In some embodiments, cameras of the subset might be triggered one after the other with a time delay, e.g. wherein the cameras are triggered depending on a function determined by a traveling speed and/or a determined position of the carrier vehicle.

In a further embodiment, each of the plurality of cameras is embodied to have a same focal length common to all of the plurality of cameras.

In a further embodiment, the near-infrared camera comprises a focal length that is different to a focal length of each of the cameras of the plurality of cameras. In particular, in case of multiple near-infrared cameras (see above), each of the near-infrared cameras might be embodied to have the same focal length common to all of the near-infrared cameras.

In a further embodiment, each camera of at least a subset of the plurality of cameras might comprise a lens that introduces a barrel lens distortion.

In a further embodiment, the computing unit might be configured to combine image data based on near-infrared images (e.g. to generate at least one of the country mode composite image, the city mode composite nadir image, and the city mode side oblique images). In some embodiments, the near-infrared images might be effected by a near-infrared camera as described above.

In a further embodiment, the computing unit is configured to compute one or more flight paths for the carrier vehicle. In some embodiments, a track clearance of a flight path for the country mode might be determined by the width of the country mode composite image whereas the track clearance of a flight path for the city mode might be determined by the width of the city mode composite nadir image and/or the width of the city mode side oblique images. It is noted that the track clearance defines the separation between adjacent tracks of a flight path. In some embodiments, the adjacent tracks of a flight path might be parallel to each other.

The track clearance corresponding to the country mode might be greater than the track clearance corresponding to the city mode.

In a further embodiment, the computing unit is configured to determine (e.g. continuously and in real time) a roll angle of the aerial imaging device and, based thereof, to define a subsection of the combined uninterrupted total field of view that is symmetrical in device-transverse direction with respect to nadir direction. It is noted that the subsection is smaller than the combined uninterrupted total field of view provided by the plurality of cameras. In some embodiments, when generating a country mode composite image or a city mode composite nadir image, at least part of the combined uninterrupted total field of view that is not comprised by the subsection might be omitted.

In some embodiments, the computing unit might be configured to combine a plurality of country mode composite images, city mode composite nadir images or city mode side oblique images to produce a swath of the target area.

It is noted that a difference between the heading of an aircraft and the track direction might occur, for instance due to crosswinds. However, for descriptions regarding the device it shall be assumed that the actual heading of the aircraft and the track direction coincide.

In some embodiments, the roll angle might be compensated during the operation of the claimed device. Therefore, the compensation might be conducted for each image individually based on a measurement of a roll angle of the carrier vehicle during the time at which the respective image was being captured. In other embodiments, the roll angle might be compensated in post-processing. This might be conducted similarly to the previously mentioned approach where each image is being processed individually, or by compensating the roll angle of a plurality of images simultaneously. Therefore, the amounting image data might also be transmitted to different means of computation of the computing unit, such as a computing cloud service or a server cluster. This may happen during acquisition or after the aerial imaging device has returned to the ground. As not all image data must be saved when conducting the compensation during the operation, the amounting image data might be reduced compared to the approach of post-processing, as not all data must be transmitted and saved for the later processing.

In aerial imaging, ground sampling distance describes the distance between pixel centres of a digital image of the ground. The distance between adjacent pixels defines the image resolution, whereas a larger distance means that the resolution is lower. Considering that the ground sampling distance also defines the swath width, and thus the imaging productivity, an adequate compromise between ground sampling distance and swath width must be selected. The ground sampling distance may be adjusted by selecting the corresponding flight height.

Besides the fact that the present invention enables multiple use-cases for the same device, additional advantages may be derived. Due to the possibility for more flexible arrangements of the components, the present invention allows for system designs that are more compact compared to conventional systems. This allows for the utilization of the aerial imaging device with relatively small aircrafts or unmanned aerial vehicles (UAVs). Also, since small image sensors are vastly cheaper than big image sensors, the overall price of such a system may be greatly reduced.

Additionally, as a multitude of different arrangements are possible thanks to the present invention, components might be selected from a broader spectrum of products. Hence it might be possible to choose relatively inexpensive components, whereas the components in conventional devices are oftentimes custom made. Therefore, the present invention might allow to reduce the product costs of an aerial imaging device.

Also, the present invention might be mounted to a stabilization system, in order to compensate for the movement of the aircraft.

The invention further relates to a computer program comprising program code having computer-executable instructions which, when the program is executed by a computer, cause the computer to carry out the steps of:
(i) reading images provided by an aerial imaging device configured to acquire airborne imagery of a target area and comprising a plurality of cameras, wherein each camera has a camera field of view, the cameras are arranged and configured to have different viewing directions in a device-transverse direction that corresponds to a cross-track direction perpendicular to a traveling direction of the aerial imaging device, and the cameras of the plurality of cameras have overlapping fields of view such that - in the device-transverse direction - the cameras together provide a combined uninterrupted total field of view of at least 75 degrees, e.g. at least 90 degrees, which is larger than an individual field of view of each of the cameras; and
(ii) combining the images for generating a country mode composite image based on a combination of images from several of the cameras of the plurality of cameras and providing a field of view which is only a partial section of the total field of view, and a city mode composite nadir image and city mode side oblique images, wherein the city mode composite nadir image is generated based on a combination of images from several of the cameras of the plurality of cameras and provides a field of view which is only a partial section of the field of view of the country mode composite image, and wherein the side oblique images provide fields of view which are only partial sections of the total field of view and have more oblique viewing directions (to left or right) than the city mode composite nadir image.

In particular, the computer program comprises computer-executable instructions which cause a computing unit of a system as described above to carry out any of the computational steps described with reference to said system.

### BRIEF DESCRIPTION OF THE DRAWINGS

By way of example only, specific embodiments of the invention will be described more fully hereinafter with reference to the accompanying figures, wherein:
Figure 1 shows an aerial imaging device that is mounted to a carrier vehicle while consecutively imaging the target area below the carrier vehicle;
Figure 2 shows the aerial imaging device mounted to a carrier vehicle traveling in a track direction;
Figure 3 shows a plurality of cameras with partially overlapping fields of view;
Figure 4 shows a combined uninterrupted total field of view that is effected by three cameras;
Figure 5 shows an exemplary combined uninterrupted total field of view of a plurality of cameras;
Figure 6 shows the exemplary combined uninterrupted total field of view of Figure 5, further comprising forward oblique and rear oblique cameras;
Figure 7 shows the exemplary field of view of Figure 6, further comprising a near-infrared field of view;
Figure 8a, 8b, and 8c show real field of views onto the ground compared to virtually generated field of views relative to the track direction, wherein the virtual fields of view are effected by a specific camera selection for providing the country mode composite image, the city mode composite nadir image, and the city mode side oblique images;
Figure 9 shows a plurality of images that are to be compensated for different roll angles of the carrier vehicle;
Figure 10 shows an exemplary arrangement of cameras of the aerial imaging device that is mounted on a carrier vehicle;
Figure 11 shows another exemplary arrangement of cameras of the aerial imaging device;
Figure 12 shows another exemplary arrangement of cameras of the aerial imaging device;
Figure 13 shows the influence of a barrel lens on the ground sampling distance depending on the across-track angle.

### SPECIFIC EMBODIMENTS OF THE INVENTION

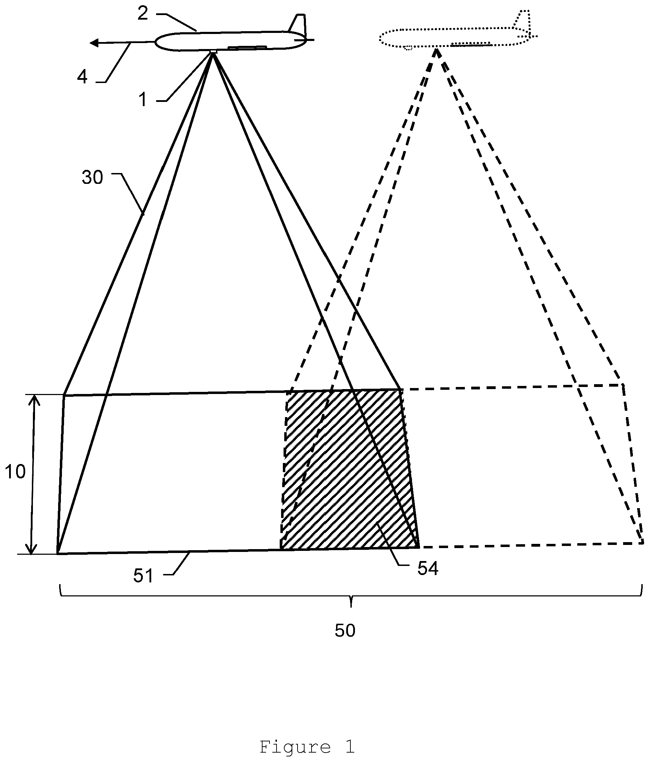

Figure 1 shows a typical aerial surveying measurement of an overflown terrain using an aerial imaging device 1 that is mounted on a carrier vehicle 2, such as a fixed-wing aircraft.

By way of example, cameras for aerial imaging may have a device-transverse field of view of 45° for providing a large combined uninterrupted total field of view 30 transverse to the flight direction. The so-called device-transverse direction is a direction which is foreseen to be the direction across a forward flying direction when the camera is mounted to the aircraft. During measurement, the overflown terrain is consecutively imaged by the camera arrangement, wherein due to the forward flight movement a swath 50 of the surface is captured.

In the prior art, often imaging sensors with rather large dimensions of the sensor surface are used. Such sensors are often built and specified specifically for airborne surveying and the corresponding application (and are typically correspondingly expensive). For example, in the prior art, sensors are used that provide a sensor surface with a large extension at least in the device-transverse direction, e.g. having a device-transverse extension of at least 60 mm. In contrast, an aerial imaging device according to the invention can, for example, also be equipped with several more conventional (e.g. less expensive) sensors, e.g. sensors having smaller sensor surfaces than sensors commonly used in aerial surveying, and still provides a similar or even larger device-transverse field of view.

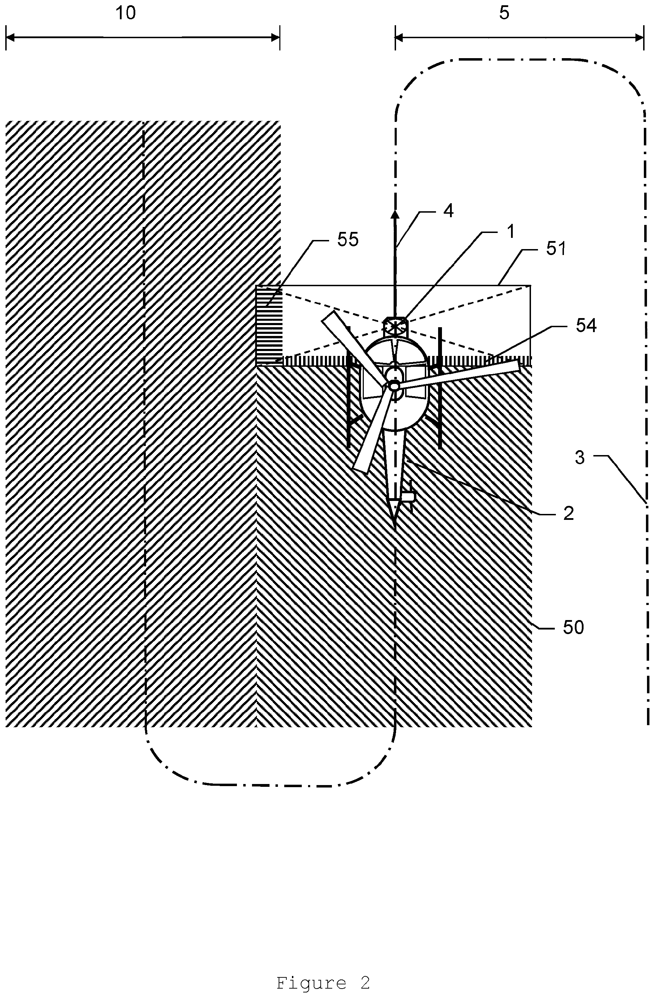

Figure 2 shows a carrier vehicle 2 carrying an aerial imaging device while traveling on a flight path 3 in a track direction 4. As adjacent swaths 50 might partially overlap 55 in order to achieve a continuous coverage of the target area, the track clearance 5 between adjacent tracks might differ from the swath width 10. Also, the swath width is dependent on the width of the combined uninterrupted total field of view 30 in device-transverse direction, which is defined as the direction perpendicular to the track direction 4, i.e. the direction which is foreseen to be the direction across a forward flying direction when the camera is mounted to the aircraft.

Flight paths 3 might be computed either prior to or during operation. Commonly, a flight path would be laid out for adjacent tracks to be approached in alternating direction such that redundant flight time may be kept small. In other words, such a flight path could be described as meandering or winding. However, to a person skilled in the art it is obvious that there is a multitude of possible flight paths.

Images are continuously captured in sequence while traveling in track direction 4. The triggering frequency to capture the images might depend on the speed of the carrier vehicle relative to the ground and might be chosen such that consecutive images partially overlap 54.

By means of example, the imaging may be halted when the carrier vehicle conducts turns or similar directional changes that result in a big roll angle. However, in other cases the aerial imaging device might remain operational during the turn as well.

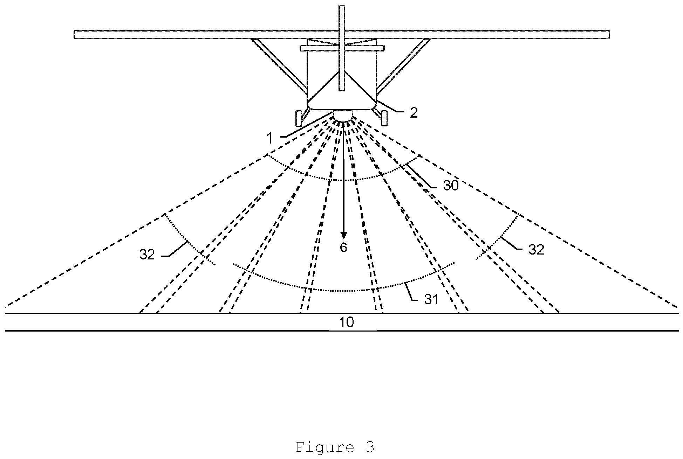

Figure 3 shows an aerial imaging device 1 that is mounted on a carrier vehicle 2. The cameras are arranged such that their fields of view partially overlap to provide a combined uninterrupted total field of view 30. Depending on the operational mode, different images or image sections from the images of the multiple cameras are used to generate different composite images. In particular, the images and/or image sections used for the country mode composite image, the city mode nadir composite image and the city mode side oblique images are each provided by correspondingly assigned camera groups, wherein the respective camera groups associated with the country mode composite image, the city mode nadir composite image and the city mode side oblique images differ from one another.

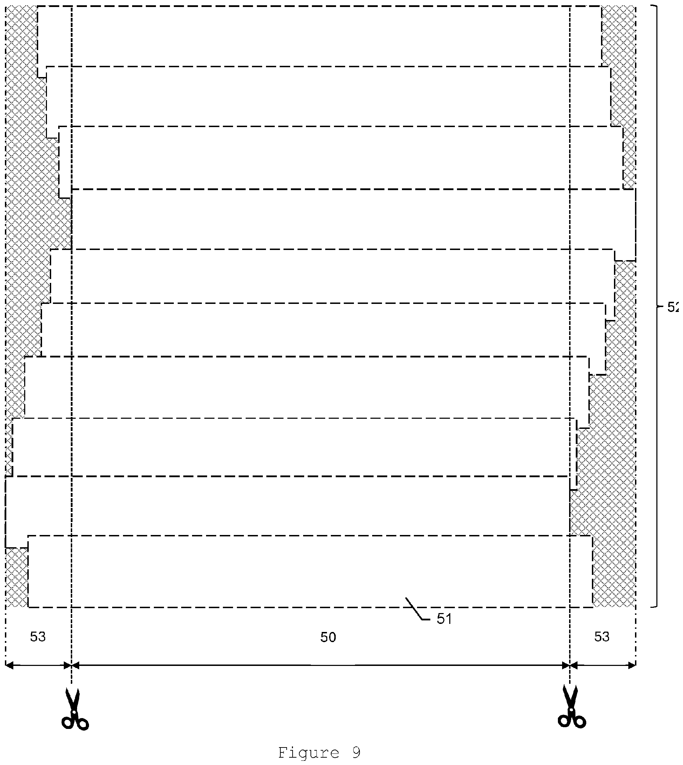

By way of example, the multiple cameras comprise seven cameras, wherein the five cameras that provide field of views closest to the nadir view form the city mode nadir group, providing for generation of a city mode nadir composite image having a nadir field of view 31 that is larger than the individual field of view of each of the involved camera. The two cameras providing the two left outermost field of views and the two right outermost field of views form the city mode oblique group that provides for generation of a left and a right city mode composite side oblique image, e.g. wherein each of these left and right city mode composite images provides a side oblique field of view 32 that is larger than the individual field of views provided by each of the cameras of the city mode oblique group. For the country mode, all of the plurality of cameras are used and form the so-called country mode group, providing for generation of a country mode composite image having a field of view which essentially covers the full field of view provided by the multiple cameras (typically the field of view of the country mode composite image is slightly smaller than the combined uninterrupted total field of view 30 provided by the cameras, e.g. to allow for roll-angle correction as explained below with reference to Fig. 9).

The combined uninterrupted total field of view 30 might expand over a roll angle for at least 100 degrees.

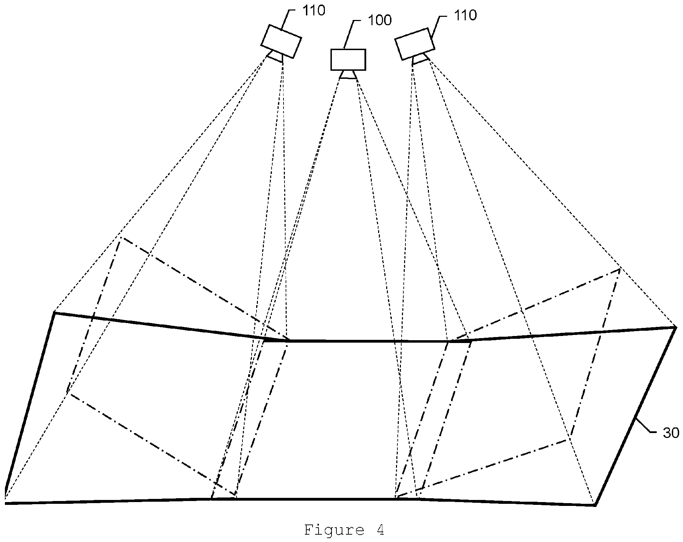

Figure 4 shows a plurality of cameras that provide overlapping fields of view to compose a combined uninterrupted total field of view 30. It is noted that the projection of the fields of view onto a virtual plane, also called footprint, varies in size depending on the angle of the optical axis of a camera relative to nadir and on the distance to the virtual plane. By means of example, the dash-dotted line indicates areas of equal size for each camera. As can be seen, a camera being oriented to an oblique view might result in capturing a bigger footprint compared to a nadir camera that is positioned at the same distance from the virtual plane. It is also noted that not all information that might be present within a footprint might actually be visible in an image captured by the corresponding camera, as occlusions, obstructions or orifices might occur.

In other words, by means of example, the dash-dotted lines visualize for each camera a plane within the field of view that comprises the same area. Therefore, it is clearly visible, that the effective footprints of the oblique cameras in this example cover a larger area than the footprint of the nadir camera.

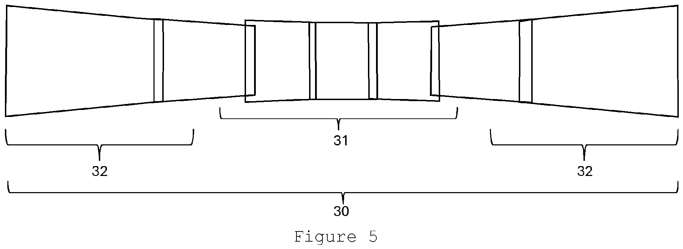

Figure 5 shows an exemplary combined uninterrupted total field of view 30 composed of a plurality of camera units that partially overlap. By means of example, the city mode nadir group comprises five cameras, of which the three cameras looking closest to nadir are oriented in portrait mode and one camera looking further to the left and one camera looking further to the right are oriented in landscape mode. The city mode oblique group comprises the two cameras looking to the extreme left and the two cameras looking to the extreme right, each oriented in landscape mode (the camera of the city mode oblique group looking to the inner left and the camera of the city mode oblique group looking to the inner right are thus both part of the city mode nadir group and the city mode oblique group). In device-transverse direction, fields of view onto the ground provided by said cameras partially overlap. Due to the perspective of the camera, i.e. the cameras optical axes being tilted relative to nadir direction, perspective distortion increases towards the lateral ends.

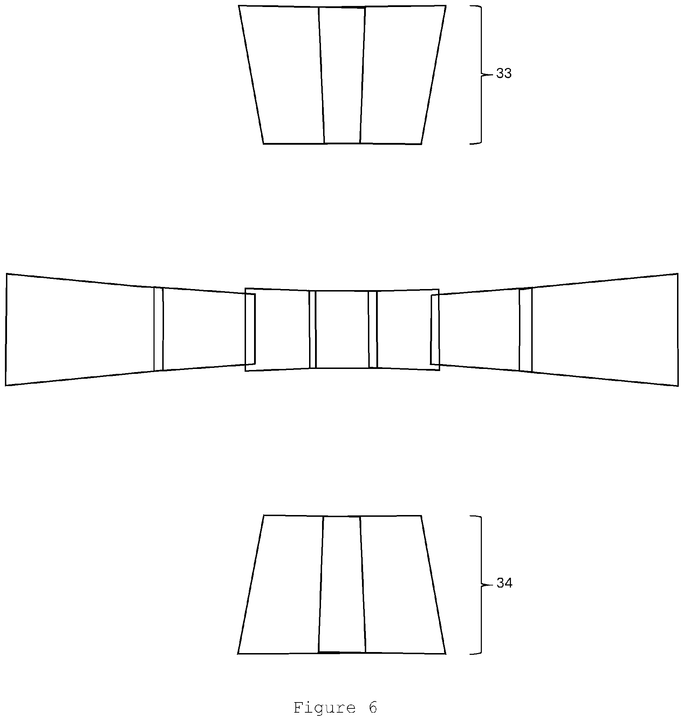

Figure 6 shows the exemplary combined uninterrupted total field of view corresponding to Figure 5, wherein the city mode oblique group further comprises cameras that effect a forward oblique field of view 33 and a rear oblique field of view 34. By means of example, two cameras are arranged forward in track direction and two cameras are arranged backwards in track direction such that their fields of view are oriented in portrait mode and partially overlap. Again, perspective distortion increases proportional to the angle relative to nadir and hence the ground sampling distance increases and the resolution decreases.

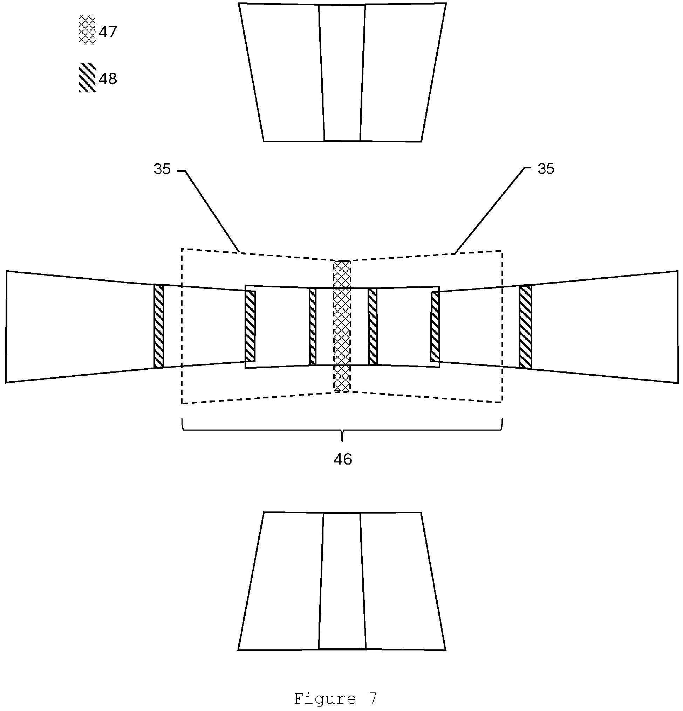

Figure 7 shows the exemplary combined uninterrupted total field of view of Figure 6, further comprising the overlapping near-infrared fields of view 35 of two near-infrared cameras. By means of example, the near-infrared cameras are oriented in landscape mode. The near-infrared cameras are arranged such that their overlapping section of the near-infrared field of view 47 does not coincide with any overlapping section of the overlapping (e.g. color or RGB) camera fields of view 48 that effect the combined uninterrupted total field of view.

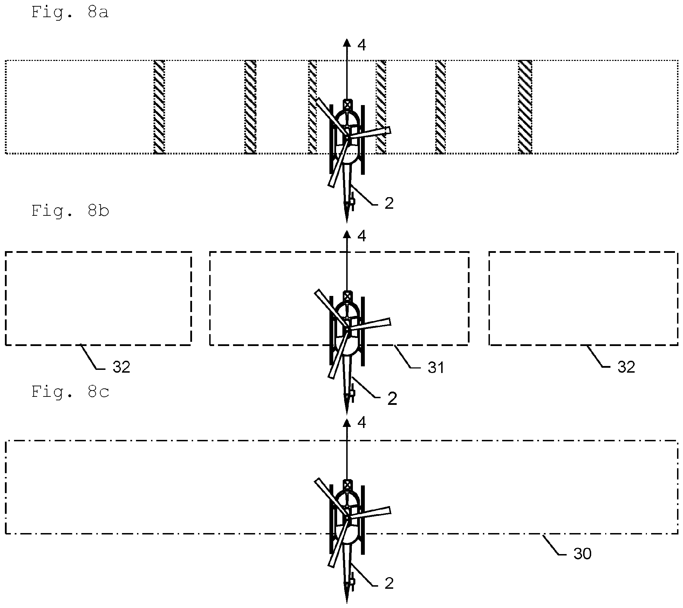

Figure 8a, 8b, and 8c schematically depict real field of views of the multiple cameras onto the ground compared to virtually generated field of views relative to the track direction 4 of the carrier vehicle 2, wherein the virtual fields of view are effected by a specific camera selection for providing the country mode composite image, the city mode composite nadir image, and the city mode side oblique images (see also description above with respect to Fig. 5).

Figure 8a depicts the individual (real) fields of view of provided by images of a plurality of cameras comprised by an aerial imaging device according to the invention. Overlapping sections of the fields of view are visualised as hatched areas.

Figure 8b depicts a nadir field of view 31 provided by a city mode nadir composite image generated from images of a so-called inner grouping of the plurality of cameras utilised in the city mode (the inner grouping referring to cameras that provide field of views closest to nadir). In the example shown, this city mode nadir group comprises five cameras that provide field of views symmetrically arranged around the nadir direction. Left and right from the nadir field of view 31, two respective side oblique field of views 32 provided by composite side oblique images are depicted. Here the composite side oblique images are generated from cameras providing the two extreme left and the two extreme right field of views. These cameras are referred to as the city mode oblique group. Thus, the cameras providing the inner left field of view and the inner right field of view of the city mode oblique group are thus both part of the city mode nadir group and the city mode oblique group. In other words, the side oblique field of views 32 are directed further in device-transverse direction than the city mode nadir field of view 31.

Figure 8c depicts a possible grouping of the plurality of cameras utilised in the country mode. The country mode group in this example comprises all cameras of the plurality of cameras, i.e. the field of view of the country mode composite image essentially corresponds to the combined uninterrupted total field of view 30 provided by the multiple cameras (typically the field of view provided by the country mode composite image is only slightly smaller than the combined uninterrupted total field of view 30 provided by the multiple cameras).

Figure 9 shows a plurality of composite images as they might be generated by an aerial imaging device according to the claimed invention, wherein multiple such images may be combined to a swath.

By means of example, the width of each individual image that is produced based on the combined uninterrupted total field of view is individually compensated according to a roll angle of the carrier vehicle. Therefore, a subsection of each combined uninterrupted total field of view might be chosen, omitting at least part of the combined uninterrupted total field of view, such as the lateral ends 53, such that the resulting images and thus the resulting swath 50 is symmetrical relative to nadir direction.

By means of another example, the final swath 50 or at least part of a swath might be compensated by omitting lateral ends 53 of an individual image based on the combined uninterrupted total field of view 51 according to the transverse offset of other combined uninterrupted total fields of view. In some embodiments, this might be computed in post processing, whereas in other embodiments this might be continuously adapted during operation.

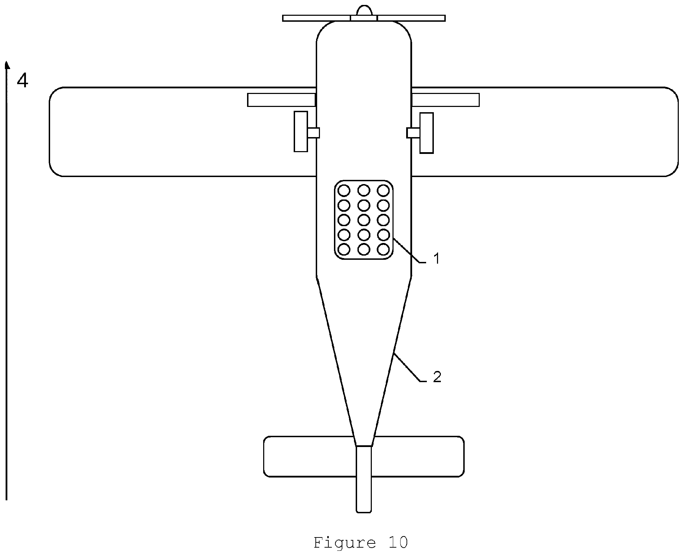

Figure 10 shows an exemplary arrangement of cameras of the aerial imaging device 1. The cameras are predominantly arranged in the intended track direction 4 of the carrier vehicle 2. Individual cameras might be triggered in a time-delayed manner in order to compensate for the positional offset in track direction 4. In other words, the cameras are triggered such that their trigger position coincides with the trigger position of the precedingly triggered camera that is positioned adjacently in the track direction. Note that the physical camera arrangement might not be determined solely by corresponding camera groups. However, in some embodiments, cameras that are comprised by the same group might be positioned one after the other in the track direction.

It is noted that besides this exemplary depiction there is a multitude of possible mounting designs for the claimed invention. In some embodiments this might pertain to external mounts, for example by using non-invasive clamps that are to be externally mounted on existing structures such as a strut mount or at the nose of a helicopter. In other embodiments, the aerial imaging device might be positioned inside of the carrier vehicle, whereas the carrier vehicle comprises a transparent enclosure or even an orifice, such as a trap door, such that the device might be utilized.

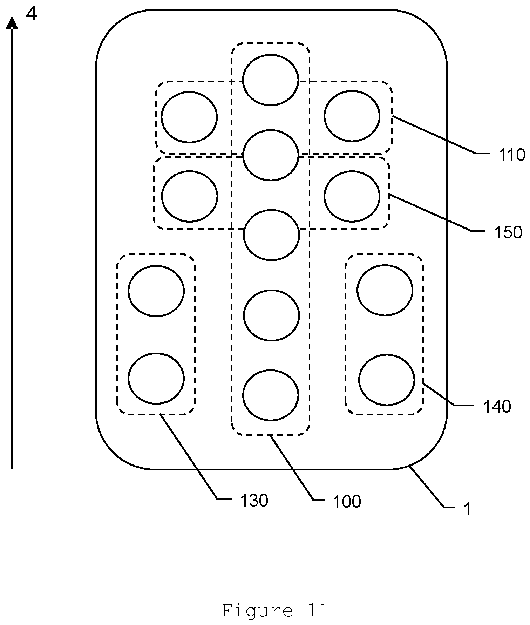

Figure 11 shows another exemplary arrangement of cameras of the aerial imaging device 1 relative to the intended track direction 4. The affiliations of the individual cameras in regard to the plurality of camera units are visualized by dashed lines.

By way of example, the camera arrangement as depicted by Figure 11 comprises a city mode nadir group comprising five nadir cameras 100 that are arranged in a straight line in track direction. These cameras have slightly different viewing directions in the device-transverse direction such that they provide overlapping field of views of the ground in device-transverse direction. To improve image alignment and maximize the field of view in track direction, they are sequentially triggered in a time-delayed manner to acquire images from the same axial position along the flight track. Furthermore, the arrangement comprises a city mode oblique group that comprises two side oblique cameras 110, two forward oblique cameras 130, and two rear oblique cameras 140. The side oblique cameras are oriented such that their fields of view symmetrically overlap with the field of view of the city mode nadir group on both lateral ends in device-transverse direction. The combination of the fields of view of the city mode nadir group and the city mode oblique group effect the combined uninterrupted total field of view of the camera arrangement. The cameras of the forward and the rear oblique cameras are oriented such that their field of view is shifted to the front and the back, respectively. Further, they are oriented such that the fields of view of each two cameras are laterally adjacent. Additionally, the arrangement comprises two near-infrared cameras 150. This exemplary arrangement might be utilized to effect a field of view as it is depicted by Figure 7. In a different example, all cameras might be placed in a straight line or in other arrangements, such that the transverse offset is minimized.

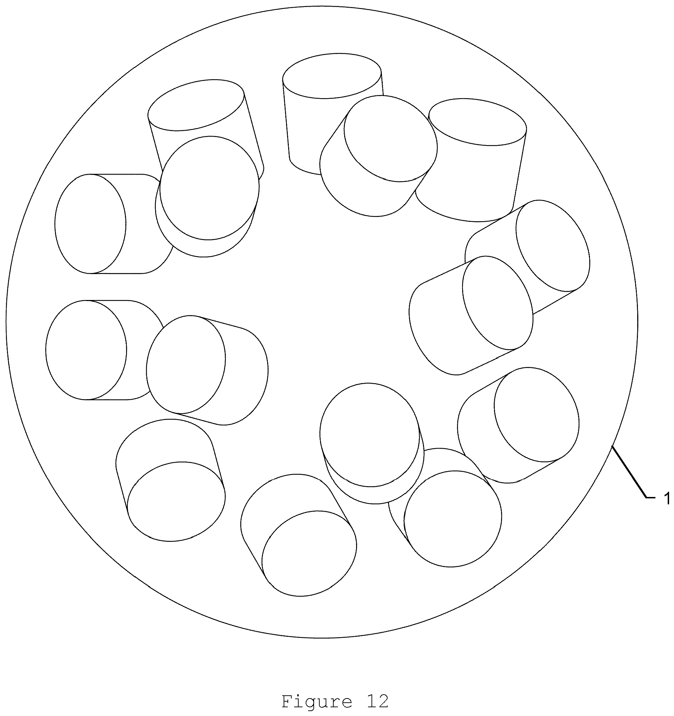

Figure 12 shows another exemplary arrangement of cameras of the aerial imaging device 1 from a perspective from below that is to be mounted on a carrier vehicle. In this example, the aerial imaging device is configured to be comprised by a spherical housing. This relatively compact design allows for a relatively small device in comparison to other camera arrangements.

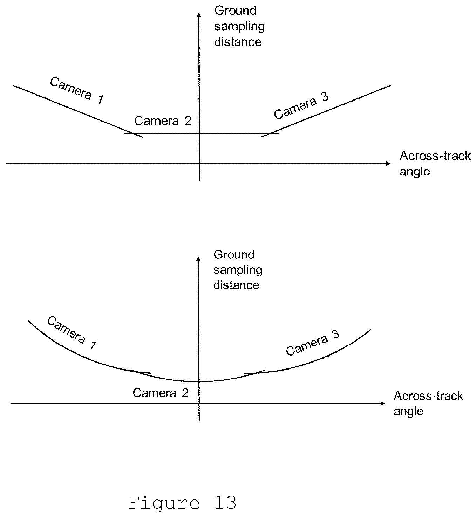

Figure 13 qualitatively depicts the influence of a barrel lens on the ground sampling distance depending on the across-track angle. The ground sampling distance increases relative to the angle relative to nadir direction. By means of example, using distortion-free lenses, this might result in discontinuous changes in the ground sampling distance depending on the angle. A lens that introduces a barrel lens distortion might allow for smoother changes in the ground sampling distance. Additionally, a lens that introduces a barrel lens distortion might also increase the field of view of said camera.

Although the invention is illustrated above, partly with reference to some specific embodiments, it must be understood that numerous modifications and combinations of different features of the embodiments can be made. All of these modifications lie within the scope of the appended claims.

### Reference signs

- 1: aerial imaging device
- 2: carrier vehicle
- 3: flight path
- 4: track direction
- 5: track clearance
- 6: nadir direction
- 10: swath width
- 30: combined uninterrupted total field of view
- 31: nadir field of view
- 32: side oblique field of view
- 33: forward oblique field of view
- 34: rear oblique field of view
- 35: near-infrared field of view of each of the near-infrared cameras
- 46: combined field of view of the infrared cameras
- 47: overlapping sections of the near-infrared fields of view
- 48: overlapping sections of the overlapping camera fields of view of the plurality of cameras
- 50: swath
- 51: image based on combined uninterrupted total field of view
- 52: plurality of images
- 53: lateral ends
- 54: overlap of consecutive images
- 55: overlap of adjacent swaths
- 100: nadir cameras
- 110: side oblique cameras
- 130: forward oblique cameras
- 140: rear oblique cameras
- 150: near-infrared cameras

## Claims

1. System comprising an aerial imaging device (1) configured to be mounted on a carrier vehicle (2), the carrier vehicle being configured to be traveling in a track direction (4) and at a traveling height, the aerial imaging device (1) being configured to acquire airborne imagery of a target area and comprising a plurality of cameras, each camera having a camera field of view, the cameras being arranged and configured to have different viewing directions in a device-transverse direction that corresponds to a cross-track direction perpendicular to the track direction (4), **characterized in that**
• the cameras of the plurality of cameras have overlapping fields of view such that - in the device-transverse direction - the cameras together provide a combined uninterrupted total field of view (30) of at least 75 degrees, in particular at least 90 degrees, which is larger than an individual field of view of each of the cameras,
• the system comprises a computing unit configured to combine images of the cameras of the plurality of cameras for providing generation of
∘ a country mode composite image generated based on a combination of images from several of the cameras of the plurality of cameras and providing a field of view in device-transverse direction which is only a partial section of the total field of view (30), and
∘ a city mode composite nadir image and city mode side oblique images, wherein the city mode composite nadir image is generated based on a combination of images from several of the cameras of the plurality of cameras and provides a field of view (31) in device-transverse direction which is only a partial section of the field of view of the country mode composite image, and wherein the city mode side oblique images provide fields of view (32) in device-transverse direction which are only partial sections of the total field of view and have more oblique viewing directions than the city mode composite nadir image.

2. The system according to claim 1, wherein the computing unit is configured to provide that
a. in the country mode, the country mode composite image is generated from images of a group of the cameras of the plurality of cameras, country mode group, and
b. in the city mode, the city mode composite nadir image is generated from images of a further group of the cameras of the plurality of cameras, city mode nadir group, wherein the city mode nadir group differs from the country mode group, and
c. in the city mode, the city mode side oblique images are generated from images of a further group of the cameras of the plurality of cameras, city mode oblique group, wherein the city mode oblique group differs from the city mode nadir group and the country mode group, particularly wherein the side oblique images are generated based on one or multiple image sections of one or multiple images provided by the city mode oblique group, in particular wherein in device-transverse direction the fields of view of the cameras of the city mode oblique group point further away from nadir (6) than the cameras of the city mode nadir group,
in particular wherein the plurality of cameras comprises at least five cameras, more particularly at least seven cameras.

3. The system according to claim 2, wherein the country mode group comprises more cameras than the city mode nadir group, in particular wherein the country mode group comprises a selection of cameras out of the plurality of cameras that provides the combined uninterrupted total field of view in the device-transverse direction.

4. The system according to any of the preceding claims, configured that the combined uninterrupted total field of view (30) expands over an angle in the device-transverse direction, wherein
a. the angle corresponds to at least 70 degrees for country mode composite images, particularly at least 100 degrees; and
b. the angle corresponds to less than 80 degrees for city mode composite nadir images, particularly less than 60 degrees.

5. The system according to any of the preceding claims, wherein the aerial imaging device further comprises, particularly the plurality of cameras comprises,
a. at least one camera that is configured to effect a forward oblique field of view (33), in particular comprising two or more cameras that are arranged in such a way that their fields of view are laterally adjacent and partially overlap; and
b. at least one camera that is configured to effect a rear oblique field of view (34), in particular comprising two or more cameras that are arranged in such a way that their fields of view are laterally adjacent and partially overlap;
wherein the computing unit is further configured for the city mode to provide forward oblique images and rear oblique images, in particular, wherein a combined uninterrupted total field of view (31) of the city mode nadir group in devise-transverse direction spans at least over the same angle in device-transverse direction as an uninterrupted total field of view in device-transverse direction of the forward oblique field of view or the rear oblique field of view.

6. The system according to any of the preceding claims, wherein one or more cameras of the plurality of cameras are oriented to a landscape mode and another camera of the plurality of cameras is oriented to a portrait mode, in particular wherein the camera field of view of the landscape mode is rotated by 90 degrees compared to the portrait mode.

7. The system according to any of the preceding claims, wherein the aerial imaging device (1) further comprises a near-infrared camera, the near-infrared camera having a near-infrared field of view (35), the near-infrared camera being arranged in such a way that the near-infrared field of view partially overlaps with the combined uninterrupted total field of view (30) of the plurality of cameras, in particular wherein the aerial imaging device comprises two near-infrared cameras, the near-infrared cameras being arranged in such a way that the near-infrared fields of view (35) partially overlap, more particularly wherein an overlapping section (47) of the near-infrared fields of view (35) does not coincide with any overlapping section 48) of the overlapping camera fields of view of the plurality of cameras.

8. The system according to any of the preceding claims, wherein each of the plurality of cameras is embodied to have a same focal length common to all of the plurality of cameras.

9. The system according to claim 7, wherein the near-infrared camera comprises a focal length that is different to a focal length of each of the cameras of the plurality of cameras, in particular wherein, if applicable, each of the near-infrared cameras is embodied to have the same focal length common to all of the near-infrared cameras.

10. The system according to any of the preceding claims, wherein at least a subset of the plurality of cameras are arranged in a straight line in the track direction, in particular wherein cameras of the subset are triggered one after the other with a time delay, more particular wherein the cameras are triggered depending on a function determined by a traveling speed of the carrier vehicle.

11. The system according to any of the preceding claims, wherein each camera of at least a subset of the plurality of cameras comprises a lens that introduces a barrel lens distortion.

12. The system according to any of the preceding claims, wherein the computing unit is configured to combine image data based on near-infrared images, particularly based on near-infrared images that are effected by a near-infrared camera according to claim 7.

13. The system according to any of the preceding claims, wherein the computing unit is configured to compute one or more flight paths for the carrier vehicle, in particular wherein a track clearance (5) of a flight path (3) for the country mode is determined by the width (10) of the country mode composite image whereas the track clearance of a flight path for the city mode is determined by the width of the city mode composite nadir image and/or the width of the city mode side oblique images, the track clearance defining the separation between adjacent tracks of a flight path.

14. The system according to any of the preceding claims, wherein the computing unit is configured to, particularly continuously, determine a roll angle of the aerial imaging device and, based thereof, to define a subsection of the combined uninterrupted total field of view that is symmetrical in device-transverse direction with respect to nadir direction (6), the subsection being smaller than the combined uninterrupted total field of view, in particular wherein, when generating a country mode composite image or a city mode composite nadir image, at least part (53) of the combined uninterrupted total field of view that is not comprised by the subsection is omitted.

15. Computer program comprising program code having computer-executable instructions which, when the program is executed by a computer, cause the computer to carry out the steps of
• reading images provided by an aerial imaging device (1) configured to acquire airborne imagery of a target area and comprising a plurality of cameras, each camera having a camera field of view, the cameras being arranged and configured to have different viewing directions in a device-transverse direction that corresponds to a cross-track direction perpendicular to a traveling direction (4) of the aerial imaging device (1), wherein the cameras of the plurality of cameras have overlapping fields of view such that - in the device-transverse direction - the cameras together provide a combined uninterrupted total field of view of at least 75 degrees, in particular at least 90 degrees, which is larger than an individual field of view of each of the cameras, and
• combining the images for generating
∘ a country mode composite image based on a combination of images from several of the cameras of the plurality of cameras and providing a field of view which is only a partial section of the total field of view, and
∘ a city mode composite nadir image and city mode side oblique images, wherein the city mode composite nadir image is generated based on a combination of images from several of the cameras of the plurality of cameras and provides a field of view which is only a partial section of the field of view of the country mode composite image, and wherein the side oblique images provide fields of view which are only partial sections of the total field of view and have more oblique viewing directions than the city mode composite nadir image.
